# EUROPEAN PATENT APPLICATION

(11) **EP 4 471 699 A1**
(43) Date of publication of application: **04.12.2024**
(21) Application number: 23746443.3
(22) Date of filing: 29.01.2023
(51) Int. Cl.: G06Q 20/36, G06Q 20/38, G06Q 20/40, G06Q 40/04, G06Q 20/22

(54) **DIGITAL CURRENCY TRANSACTION METHOD AND SYSTEM AND DIGITAL CURRENCY CARD APPLICATION APPARATUS**

(30) Priority: 30.01.2022 CN 202210114133
(71) Applicant: Digital Currency Institute, The People's Bank of China, Beijing 100071 (CN); Shenzhen Financial Technology Institute (Financial Technology Institute, PBC), Shenzhen, Guangdong 518046 (CN)
(72) Inventor: MU, Changchun, Beijing 100071 (CN); DI, Gang, Beijing 100071 (CN); YU, Peng, Beijing 100071 (CN); CUI, Peidong, Beijing 100071 (CN); ZHAO, Xinyu, Beijing 100071 (CN)
(74) Representative: Casalonga
(86) International application number: PCT/CN2023/073702
(87) International publication number: WO 2023/143566

(57) **Abstract**

The present disclosure relates to the technical field of computers. Disclosed are a digital currency transaction method and system and a digital currency card application apparatus. A specific embodiment of the method comprises: after receiving a transaction request sent by a second transaction device, a digital currency card application apparatus of a first transaction device acquiring a current power state of the first transaction device; and performing digital currency transaction with the second transaction device according to a transaction rule corresponding to the current power state of the first transaction device. According to the embodiment, the power state of a mobile intelligent terminal can be acquired, and transaction operations of the payment and the receipt on the digital currency in scenarios of power-on with power available, power-off with power available, and power-off without power available can be realized on the basis of the power state of the mobile intelligent device.

## Description

### Technical Field

The present disclosure relates to the technical field of computers, in particular to a digital currency transaction method and system, and a digital currency card application apparatus.

### Background

In recent years, mobile intelligent terminals have developed rapidly, including smart phones, smart watches, and smart Points of Sales (POS, of which the full name is points of sales message manage system) and so on. As an important wireless communication technology, Near Field Communication (NFC) has become a technology mainly used for short-distance communication due to the features of the NFC such as the security, the simplicity and the low power consumption. The weak-power state of the mobile terminal refers to that when the mobile terminal is powered off without power available, but does not reach power loss (completely out of power), the voltage is generally about 3.4V, while the power of the NFC is very low, and the remaining power of the mobile phone may still supply power to the NFC chip.

During the implementation of the present disclosure, the inventor finds at least the following problems in the prior art:
the payment operation and receipt operation on the digital currency cannot be realized in scenarios of power-off with power available and power-off without power available of the mobile intelligent device.

### Summary

In view of above, the embodiments of the present disclosure provide a digital currency transaction method and system, and a digital currency card application apparatus, which can acquire the power state of a mobile intelligent terminal, and realize the payment operation and the receipt operation of the digital currency in scenarios of power-on with power available, power-off with power available, and power-off without power available according to the power state of the mobile intelligent device.

To achieve the above object, according to one aspect of the embodiments of the present disclosure, a digital currency transaction method is provided.

The digital currency transaction method, comprising: acquiring, by a digital currency card application apparatus of a first transaction device, a current power state of the first transaction device after receiving a transaction request sent by a second transaction device; and performing, by the digital currency card application apparatus, a digital currency transaction with the second transaction device according to a transaction rule corresponding to the current power state.

As at least one alternative embodiment, the acquiring, by a digital currency card application apparatus of a first transaction device, a current power state of the first transaction device after receiving a transaction request sent by a second transaction device comprises: performing, by the digital currency card application apparatus, certificate verification with the second transaction device after receiving the transaction request sent by the second transaction device, wherein the certificate verification is configured to verify the validity of the user certificates of both the first transaction device and the second transaction device; and acquiring, by the digital currency card application apparatus, the current power state of the first transaction device after determining that the certificate verification has passed.

As at least one alternative embodiment, the digital currency card application apparatus runs in a secure element of the first transaction device; acquiring the current power state of the first transaction device comprises: calling, by the digital currency card application apparatus, a chip operating system interface of the secure element, and thereby the secure element acquiring the current power state from a software/hardware power state acquisition interface reserved by the first transaction device.

As at least one alternative embodiment, the method further comprises: pre-storing, by the digital currency card application apparatus, transaction rules written by a digital currency backend system and corresponding to various power states, wherein the transaction rules corresponding to various power states are set by a digital currency application program and sent to the digital currency backend system, or are created by the digital currency backend system when issuing by the digital currency card application apparatus.

As at least one alternative embodiment, the first transaction device serves as a payment device; when the current power state is a power-on with power available state, the transaction rule corresponding to the current power state comprises whether to enable a payment function, and a password-free payment rule and/or authenticated payment rule in a case of enabled payment function; and when the current power state is a power-off with power available sate or a power-off without power available state, the transaction rule corresponding to the current power state comprises whether to enable a payment function, and a password-free payment rule in a case of enabled payment function.

As at least one alternative embodiment, performing, by the digital currency card application apparatus, a digital currency transaction with the second transaction device according to a transaction rule corresponding to the current power state comprises: determining, by the digital currency card application apparatus, according to the transaction rule, that a payment function is enabled and the password-free payment rule has been set, wherein the password-free payment rule comprises a password-free payment amount; when a payment amount in the transaction request is less than or equal to the password-free payment amount, performing, by the digital currency card application apparatus, a password-free payment on the digital currency of the payment amount; and when a payment amount in the transaction request is greater than the password-free payment amount, determining, by the digital currency card application apparatus, that the current power state is a power-on with power available state and the authenticated payment rule has been set, and performing authenticated payment on a digital currency of a payment amount according to the authenticated payment rule.

As at least one alternative embodiment, the first transaction device serves as a payment receipt device, the current power state is one of a power-on with power available sate, a power-off with power available sate and a power-off without power available state, and the transaction rule corresponding to the current power state comprises whether to enable a payment receipt function, and a payment receipt rule in the case of enabled payment receipt function.

As at least one alternative embodiment, the digital currency card application apparatus establishes a near field communication connection with the second transaction device by means of the first transaction device, and receives a transaction request sent by the second transaction device.

As at least one alternative embodiment, the first transaction device and/or the second transaction device are/is a mobile intelligent device, and a form of the mobile intelligent device is one of a mobile phone, a watch, a bracelet, a card and a POS machine.

According to another aspect of the embodiments of the present disclosure, a digital currency card application apparatus is provided.

The digital currency card application apparatus, located in a first transaction device, comprises: a request receiving module, configured to receive a transaction request sent by a second transaction device; a power state acquiring module, configured to acquire a current power state of the first transaction device; and a transaction module, configured to perform a digital currency transaction with the second transaction device according to a transaction rule corresponding to the current power state.

As at least one alternative embodiment, the digital currency card application apparatus further comprises a certificate verification module, configured to perform certificate verification with the second transaction device, wherein the certificate verification is configured to verify the validity of the user certificates of both the first transaction device and the second transaction device; and the power state acquiring module is further configured to acquire the current power state of the first transaction device after determining that the certificate verification has passed.

As at least one alternative embodiment, the digital currency card application apparatus runs in a secure element of the first transaction device; the power state acquiring module is further configured to call a chip operating system interface of the secure element by the digital currency card application apparatus, and thereby the secure element acquires the current power state from a software/hardware power state acquisition interface reserved by the first transaction device.

As at least one alternative embodiment, the digital currency card application apparatus further comprises a rule storage module, configured to pre-store transaction rules written by a digital currency backend system and corresponding to various power states, wherein the transaction rules corresponding to various power states are set by a digital currency application program and sent to the digital currency backend system, or are created by the digital currency backend system when issuing by the digital currency card application apparatus.

As at least one alternative embodiment, the first transaction device serves as a payment device; when the current power state is a power-on with power available state, the transaction rule corresponding to the current power state comprises whether to enable a payment function, and a password-free payment rule and/or authenticated payment rule in a case of enabled payment function; and when the current power state is a power-off with power available sate or a power-off without power available state, the transaction rule corresponding to the current power state comprises whether to enable a payment function, and a password-free payment rule in a case of enabled payment function.

As at least one alternative embodiment, the transaction module is further configured to determine, by the digital currency card application apparatus, according to the transaction rule, that a payment function is enabled and the password-free payment rule has been set, wherein the password-free payment rule comprises a password-free payment amount; when a payment amount in the transaction request is less than or equal to the password-free payment amount, perform, by the digital currency card application apparatus, a password-free payment on a digital currency of a payment amount; when a payment amount in the transaction request is greater than the password-free payment amount, determine, by the digital currency card application apparatus, that the current power state is a power-on with power available state and the authenticated payment rule has been set, and perform the authenticated payment on a digital currency of a payment amount according to the authenticated payment rule.

As at least one alternative embodiment, the first transaction device serves as a payment receipt device, the current power state is one of a power-on with power available sate, a power-off with power available sate and a power-off without power available state, and a transaction rule corresponding to the current power state comprises whether to enable a payment receipt function, and a payment receipt rule in the case of enabled payment receipt function.

As at least one alternative embodiment, the digital currency card application apparatus establishes a near field communication connection with the second transaction device by means of the first transaction device, and receives a transaction request sent by the second transaction device.

As at least one alternative embodiment, the first transaction device and/or the second transaction device are/is a mobile intelligent device, and a form of the mobile intelligent device is one of a mobile phone, a watch, a bracelet, a card and a POS machine.

According to yet another aspect of the embodiments of the present disclosure, there is provided a digital currency transaction system.

A digital currency transaction system, comprising the digital currency card application apparatus provided in the embodiments of the present disclosure, and further comprising a secure element provided with a chip operating system interface, wherein the digital currency card application apparatus runs in the secure element, and the digital currency card application apparatus and the secure element are located in a first transaction device; the secure element is configured to acquire, according to a calling request of the digital currency card application apparatus for the chip operating system interface, a current power state of the first transaction device from a software/hardware power state acquisition interface reserved by the first transaction device, and to return the current power state to the digital currency card application apparatus.

According to still another aspect of the embodiments of the present disclosure, an electronic device is provided.

The electronic device, comprising: one or more processors; and a memory configured to store one or more programs, wherein when the one or more programs are executed by the one or more processors, the one or more processors implement the digital currency transaction method provided in the embodiments of the present disclosure.

According to another aspect of the embodiments of the present disclosure, a computer readable medium is provided.

The computer readable medium, on which a computer program is stored, wherein when the program is executed by a processor, the digital currency transaction method provided in the embodiments of the present disclosure is implemented.

One embodiment of the invention has the following advantages or beneficial effects: a digital currency card application apparatus of a first transaction device acquires a current power state of the first transaction device after receiving a transaction request sent by a second transaction device; and performs digital currency transaction with the second transaction device according to a transaction rule corresponding to the current power state of the first transaction device. The power state of a mobile intelligent terminal can be acquired, and transactions of the payment and receipt on the digital currency in scenarios of power-on with power available, power-off with power available, and power-off without power available can be realized on the basis of the power state of the mobile intelligent device.

Further effects of the described non-conventional optional modes will be described hereinafter in conjunction with the embodiments.

### Brief Description of the Drawings

The accompanying drawings are used to better understand the present disclosure, and do not constitute limitations to the present disclosure; wherein:
Fig. 1 is a schematic diagram illustrating the main steps of a digital currency transaction method according to an embodiment of the present disclosure;
Fig. 2 is a schematic flowchart of digital currency payment according to an embodiment of the present disclosure;
Fig. 3 is a schematic flowchart of digital currency receipt according to an embodiment of the present disclosure;
Fig. 4 is a schematic flowchart of setting a transaction rule of digital currency according to an embodiment of the present disclosure;
Fig. 5 is a schematic diagram of the main modules of a digital currency card application apparatus according to an embodiment of the present disclosure;
Fig. 6 is a structural block diagram of acquiring a power state by a digital currency card application apparatus according to an embodiment of the present disclosure;
Fig. 7 is a diagram showing the main structure of a digital currency transaction system according to an embodiment of the present disclosure;
Fig. 8 is a schematic diagram of a digital currency payment framework according to an embodiment of the present disclosure;
Fig. 9 is a schematic diagram of a digital currency receipt framework according to an embodiment of the present disclosure;
Fig. 10 is an exemplary system architecture diagram to which an embodiment of the present disclosure may be applied;
Fig. 11 is a schematic structural diagram of a computer system suitable for implementing a terminal device according to an embodiment of the present disclosure.

### Detailed Description of the Embodiments

Hereinafter, exemplary embodiments of the present disclosure are illustrated with reference to the accompanying drawings, in which various details of the embodiments of the present disclosure are included to facilitate understanding, and they shall be considered as merely exemplary. Accordingly, a person of ordinary skill in the art would recognize that various changes and modifications of the embodiments described herein can be made without departing from the scope and spirit of the present disclosure. Also, for clarity and conciseness, illustrations of well-known functions and structures are omitted in the following description.

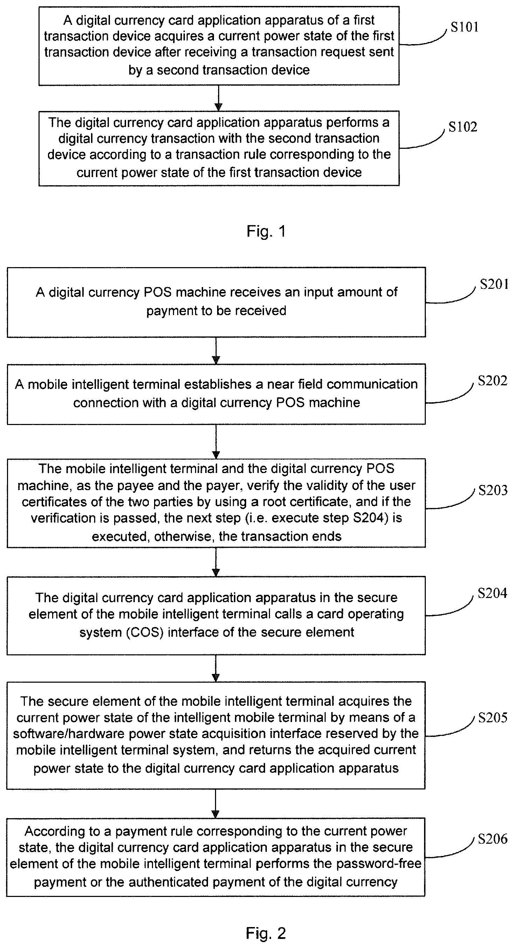

Fig. 1 is a schematic diagram illustrating the main steps of a digital currency transaction method according to an embodiment of the present disclosure. As shown in Fig. 1, the digital currency transaction method according to an embodiment of the present disclosure mainly comprises the following steps S101 to S102.

Step S101: a digital currency card application apparatus of a first transaction device acquires a current power state of the first transaction device after receiving a transaction request sent by a second transaction device;

Step S102: the digital currency card application apparatus performs a digital currency transaction with the second transaction device according to a transaction rule corresponding to the current power state of the first transaction device.

The acquiring, by the digital currency card application apparatus of the first transaction device, a current power state of the first transaction device after receiving a transaction request sent by a second transaction device, may comprises: the digital currency card application apparatus performs certificate verification with the second transaction device after receiving the transaction request sent by the second transaction device, wherein the certificate verification is configured to verify the validity of the user certificates of both the first transaction device and the second transaction device, and the digital currency card application apparatus acquires the current power state of the first transaction device after determining that the certificate verification has passed.

The digital currency card application apparatus runs in a Secure Element (SE) of the first transaction device.

Acquiring the current power state of the first transaction device comprises: the digital currency card application apparatus calls a Chip Operating System (COS) interface of the secure element, and thereby the secure element acquiring the current power state from a software/hardware power state acquisition interface reserved by the first transaction device. The software/hardware power state acquisition interface is an interface provided by a software/hardware system of the first transaction device and configured to acquire the power state of the first transaction device, wherein the software system is, for example, an operating system of the first transaction device, and the hardware system is, for example, an NFC chip of the first transaction device or other hardware capable of reading the power state of the first transaction device.

The digital currency card application apparatus may pre-store transaction rules written by a digital currency backend system and corresponding to various power states, wherein the transaction rules corresponding to various power states are set by means of a digital currency application program and sent to the digital currency backend system, or are created by the digital currency backend system when issuing by the digital currency card application apparatus.

In one embodiment, the first transaction device acts as a payment device. When the current power state is a power-on with power available state, the transaction rule corresponding to the current power state comprises whether to enable a payment function, and a password-free payment rule and/or authenticated payment rule in a case of enabled payment function; and when the current power state is a power-off with power available sate or a power-off without power available state, the transaction rule corresponding to the current power state comprises whether to enable a payment function, and a password-free payment rule in a case of the enabled payment function.

The performing, by the digital currency card application apparatus, a digital currency transaction with the second transaction device according to a transaction rule corresponding to the current power state may comprise: the digital currency card application apparatus determines, according to the transaction rule, that a payment function is enabled and the password-free payment rule has been set, wherein the password-free payment rule comprises a password-free payment amount; when a payment amount in the transaction request is less than or equal to the password-free payment amount, the digital currency card application apparatus performs a password-free payment on a digital currency of the payment amount; and when a payment amount in the transaction request is greater than the password-free payment amount, the digital currency card application apparatus determines that the current power state is a power-on with power available state and the authenticated payment rule has been set, and performs authenticated payment on the digital currency of the payment amount according to the authenticated payment rule, wherein the authenticated payment rule may comprise an authenticated payment amount, the number of payments needing to be authenticated, etc.

It should be noted that, if the payment function is not set to be enabled, the transaction process ends.

If the password-free payment rule is not set, it indicates that password-free payment is not supported, and the transaction flow is terminated.

If the payment amount in the transaction request is greater than the password-free payment amount and the current power state is a power-off with power available sate or a power-off without power available state, the transaction flow is terminated.

If the current power state is a power-on with power available state but no authenticated payment rule is set, whether to perform a digital currency transaction may usually be determined according to a default setting, for example, it is typically set by default that the authenticated payment of a digital currency is performed in a power-on with power available state, then the authenticated payment of the digital currency of the payment amount is performed; however, assuming that the default setting is not to perform the authenticated payment, the transaction flow is terminated.

The termination of the above transaction flow refers to that the first transaction device does not perform a digital currency transaction (payment) with the second transaction device.

In another embodiment, the first transaction device acts as a payment receipt device. The current power state is one of a power-on with power available sate, a power-off with power available sate and a power-off without power available state, and a transaction rule corresponding to the current power state comprises whether to enable a payment receipt function, and a payment receipt rule in the case of enabled payment receipt function.

In the described embodiments, the digital currency card application apparatus may establish a near field communication connection with the second transaction device by means of the first transaction device, and receive a transaction request sent by the second transaction device.

In the described embodiments, the first transaction device and/or the second transaction device are/is a mobile intelligent device, and the form of the mobile intelligent device is one of a mobile phone, a watch, a bracelet, a card and a POS machine.

For example, the mobile intelligent device is a mobile intelligent terminal such as a mobile phone, the digital currency in the embodiments of the present disclosure should be set as a new field application in a secure element (SE) of the mobile intelligent terminal. However, the NFC tap-to-pay under the weak-power scenario of a mobile terminal of an SE is a new innovative technology, the weak-power state of the mobile terminal refers to that when the mobile terminal is powered off without power available, but does not reach power loss (completely out of power), the voltage is generally about 3.4V, while the power of the NFC is very low, and the remaining power of the mobile phone may still supply power to the NFC chip, thereby satisfying the normal operation of the SE. Users holding a mobile intelligent terminal device having a secure element (SE) in a power-off with power available sate and a power-off without power available state still have a demand for payment and receipt of a digital currency. When a mobile intelligent terminal is in a power-on with power available sate, the SE may perform an authenticated payment or password-free payment of the digital currency, while when the mobile intelligent terminal is in a power-off without power available state and a power-off with power available state, the mobile intelligent terminal cannot authenticate the user identity, but can only perform password-free payment. According to the embodiments of the present disclosure, the digital currency card application apparatus running in the SE of the mobile intelligent terminal may acquire the power state, such as a power-on with power available state, a power-off with power available state, and a power-off without power available state, of the mobile intelligent terminal, so as to realize digital currency payment or receipt in a power-on state and a weak-power state of the mobile intelligent terminal.

Fig. 2 is a schematic flowchart of digital currency payment according to an embodiment of the present disclosure.

As shown in Fig. 2, the payment device is a mobile intelligent terminal; the mobile intelligent terminal is provided with an SE; the digital currency card application apparatus runs in the SE; the payment receipt device is a digital currency POS machine; and a digital currency payment process comprises:
step S201: the digital currency POS machine receives an input amount of payment to be received;
step S202: the mobile intelligent terminal establishes a near field communication connection with the digital currency POS machine;
wherein establishing a near field communication connection may be realized by an NFC collision between the mobile intelligent terminal and the digital currency POS machine;
step S203: the mobile intelligent terminal and the digital currency POS machine, as the payee and the payer, verify the validity of the user certificates of the two parties by using a root certificate, and if the verification is passed, the next step (i.e. execute step S204) is executed, otherwise, the transaction ends;
wherein the root certificate may be generated at a digital currency issuer side (for example, a related system of a central bank); the user certificates of the payee and the payer of the mobile intelligent terminal and the digital currency POS machine may be generated at a digital currency operating agency side (for example, a related system of a commercial bank); the root certificate is configured to verify the user certificate; and if the verification is passed, the verification of the validity of the user certificate is passed;
step S204: the digital currency card application apparatus in the secure element of the mobile intelligent terminal calls a card operating system (COS) interface of the secure element;
step S205: the secure element of the mobile intelligent terminal acquires the current power state of the intelligent mobile terminal by means of a software/hardware power state acquisition interface reserved by the mobile intelligent terminal system, and returns the acquired current power state to the digital currency card application apparatus;
for example, the secure element may acquire, by means of the COS interface, the current power state from a software/hardware power state acquisition interface reserved by the first transaction device;
step S206: the digital currency card application apparatus in the secure element of the mobile intelligent terminal performs a password-free payment or an authenticated payment of the digital currency according to a payment rule corresponding to the current power state.

In one embodiment, when a digital currency payment is performed in the power-on with power available state of the power supply of the mobile intelligent terminal, a user may preset a password-free amount threshold of the digital currency in a payment with power available state. For example, the password-free payment may be performed when the payment amount is below the password-free amount threshold, and the user needs to perform authenticated payment when the payment amount is above the password-free amount threshold.

In one embodiment, in cases where the password-free payment is performed when the payment amount is below the password-free payment threshold, performing authentication once every how many times of payments may also be set. The user may also not enable the authenticated payment function, and may be set by default that the authenticated payment of the digital currency can be supported in the case of power-on with power available.

In one embodiment, when a digital currency payment is performed in the power-off with power available state of the power supply of the mobile intelligent terminal, password-free digital currency payment may be performed. When the mobile intelligent terminal device is power-on with power available, the user may preset the total amount, the single payment amount, and the payment number of password-free payments in the case of power-on with power available. The user may also disable the password-free payment function, and may set by default that the digital currency payment cannot be performed in the case of power-off with power available.

In one embodiment, when a digital currency payment is performed in the power-off without power available state of the power supply of the mobile intelligent terminal, password-free digital currency payment may be performed. When the mobile intelligent terminal device is power on, the user may preset the total amount, the single payment amount, and the payment number of password-free payments in the case of power-off without power available. The user may also disable the password-free payment function, and may set by default that the digital currency payment cannot be performed in the case of power-off without power available.

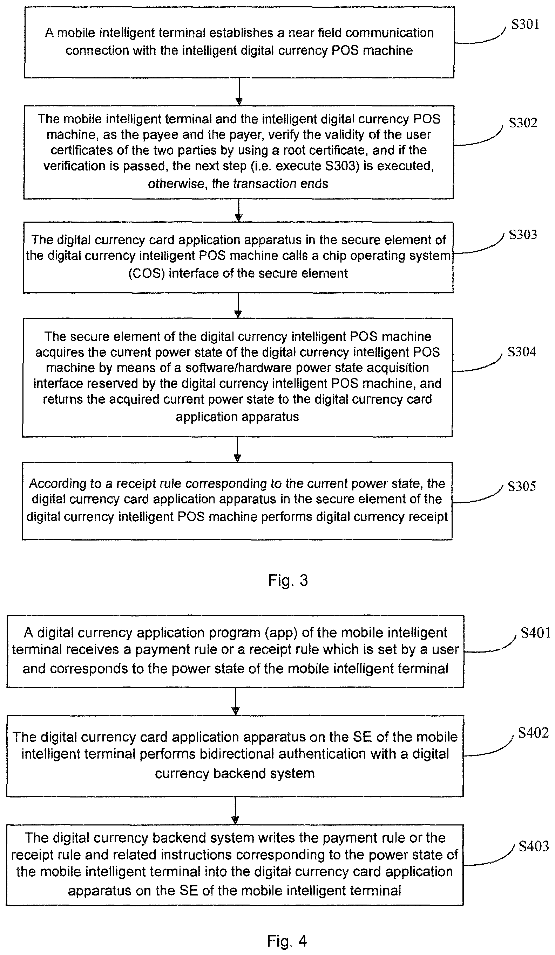

Fig. 3 is a schematic flowchart of digital currency receipt according to an embodiment of the present disclosure;
As shown in Fig. 3, the payment device is a mobile intelligent terminal, and the payment receipt device is a digital currency intelligent POS machine; the digital currency intelligent POS machine is provided with a secure element (SE); a digital currency card application apparatus runs in the SE; and the digital currency receipt process comprises:
step S301: the mobile intelligent terminal establishes a near field communication connection with the intelligent digital currency POS machine;
wherein establishing the near field communication connection may be realized by an NFC collision between the mobile intelligent terminal and the intelligent digital currency POS machine;
step S302: the mobile intelligent terminal and the intelligent digital currency POS machine, as the payee and the payer, verify the validity of the user certificates of the two parties by using a root certificate, and if the verification is passed, the next step (i.e. execute S303) is executed, otherwise, the transaction ends;
step S303: the digital currency card application apparatus in the secure element of the digital currency intelligent POS machine calls a chip operating system (COS) interface of the secure element;
step S304: the secure element of the digital currency intelligent POS machine acquires the current power state of the digital currency intelligent POS machine by means of a software/hardware power state acquisition interface reserved by the digital currency intelligent POS machine, and returns the acquired current power state to the digital currency card application apparatus;
step S305: the digital currency card application apparatus in the secure element of the digital currency intelligent POS machine performs digital currency receipt according to a receipt rule corresponding to the current power state.

In one embodiment, when a digital currency receipt is performed in the power-on with power available state of the power supply of the digital currency intelligent POS machine, the user may preset the total amount, the single payment receipt amount, and the payment receipt number of password-free payments in the case of receipt with power available of the digital currency. The user may also disable the rule setting function, and may set by default that there is no limitation of receipt rules in the case of power-on with power available.

In one embodiment, when a digital currency receipt is performed in the power-off with power available state of the power supply of the digital currency intelligent POS machine, the user may preset the total amount, the single receipt amount, and the receipt number of receipts in the case of power-off with power available and when the digital currency intelligent POS machine is powered on or is about to be powered off. The user may also disable the power-off with power available function, and may set by default that the digital currency receipt cannot be performed in the case of power-off with power available.

In one embodiment, when a digital currency receipt is performed in the power-off without power available state of the power supply of the digital currency intelligent POS machine, the user may preset the total amount, the single receipt amount, and the receipt number of receipts in the case of power-off without power available when the digital currency intelligent POS machine is powered on with power available or is about to be powered off without power available. The user may also disable the power-off without power available function, and may set by default that the digital currency receipt cannot be performed in the case of power-off without power available.

It should be noted that, the receipt device in the embodiment of the present disclosure is not limited to a digital currency intelligent POS machine, and may also be any one of digital currency mobile intelligent devices such as a smart phone, a smart watch, a smart bracelet, and an IC card. The digital currency intelligent POS machine in the foregoing embodiment may be replaced with any one of the digital currency mobile intelligent devices listed above.

Fig. 4 is a schematic flowchart of setting a transaction rule of digital currency according to an embodiment of the present disclosure.

As shown in Fig. 4, for example, a payment device or a payment receipt device is a mobile intelligent terminal, the mobile intelligent terminal is provided with a secure element (SE), and a digital currency card application apparatus runs in the SE; a transaction rule of the digital currency can be a payment rule or a receipt rule; and the rule setting process comprises:

step S401: a digital currency application program (app) of the mobile intelligent terminal receives a payment or receipt rule which is set by a user and corresponds to the power state of the mobile intelligent terminal;

it should be noted that the digital currency app of the mobile intelligent terminal is different from the digital currency card application apparatus. In one embodiment, the digital currency app of the mobile smart terminal is visible to the user through the interface, while the digital currency card application apparatus running in the SE is invisible to the user.

Step S402: the digital currency card application apparatus on the SE of the mobile intelligent terminal performs bidirectional authentication with a digital currency backend system;

wherein the digital currency card application apparatus and the digital currency backend system complete the bidirectional authentication by verifying Media Access Control (MAC) values sent mutually.

Step S403: the digital currency backend system writes payment or receipt rules and related instructions corresponding to the power state of the mobile intelligent terminal into the digital currency card application apparatus on the SE of the mobile intelligent terminal.

The related instructions refer to instructions related to payment or receipt and corresponding to the payment or receipt rules.

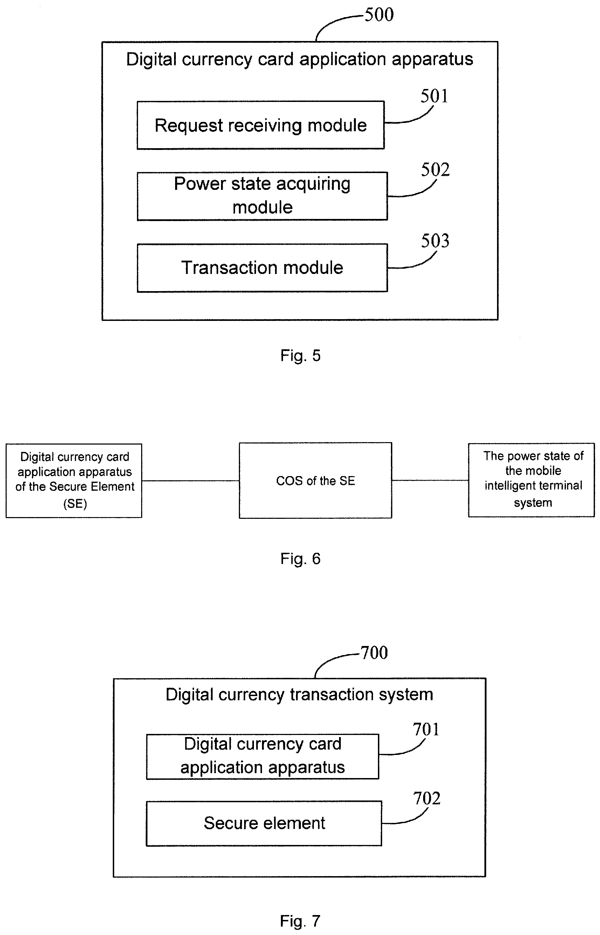

Fig. 5 is a schematic diagram of the main modules of a digital currency card application apparatus according to an embodiment of the present disclosure. As shown in Fig. 5, the digital currency card application apparatus 500 of an embodiment of the present disclosure is located in a first transaction device. The digital currency card application apparatus 500 mainly comprises: a request receiving module 501, a power state acquiring module 502 and a transaction module 503.

The request receiving module 501 is configured to receive a transaction request sent by a second transaction device.

The power state acquiring module 502 is configured to acquire a current power state of the first transaction device.

The transaction module 503 is configured to perform a digital currency transaction with the second transaction device according to a transaction rule corresponding to the current power state.

The digital currency card application apparatus 500 may further comprise a certificate verification module configured to perform certificate verification with the second transaction device, wherein the certificate verification is configured to verify the validity of the user certificates of both the first transaction device and the second transaction device; and the power state acquiring module 502 is further configured to acquire the current power state of the first transaction device after determining that the certificate verification has passed.

The digital currency card application apparatus 500 runs in the secure element of the first transaction device. The power state acquiring module 502 may be configured to call, by the digital currency card application apparatus, a chip operating system interface of the secure element, and thereby the secure element acquires the current power state from a software/hardware power state acquisition interface reserved by the first transaction device.

The digital currency card application apparatus 500 may further comprise a rule storage module, configured to pre-store transaction rules written by a digital currency backend system and corresponding to various power states, wherein the transaction rules corresponding to various power states are set by a digital currency application program and sent to the digital currency backend system, or are created by the digital currency backend system when issuing by the digital currency card application apparatus.

In one embodiment, the first transaction device acts as a payment device. When the current power state is a power-on with power available state, the transaction rule corresponding to the current power state comprises whether to enable a payment function, and a password-free payment rule and/or authenticated payment rule in a case of enabled payment function; and when the current power state is a power-off with power available sate or a power-off without power available state, the transaction rule corresponding to the current power state comprises whether to enable a payment function, and a password-free payment rule in a case of enabled payment function.

The transaction module 503 is further configured determine, by the digital currency card application apparatus, according to the transaction rule, that a payment function is enabled and the password-free payment rule has been set, wherein the password-free payment rule comprises a password-free payment amount; when the payment amount in the transaction request is less than or equal to the password-free payment amount, perform, by the digital currency card application apparatus, a password-free payment on the digital currency of the payment amount; when the payment amount in the transaction request is greater than the password-free payment amount, determine, by the digital currency card application apparatus, that the current power state is a power-on with power available state and the authenticated payment rule has been set, and perform an authenticated payment on the digital currency of the payment amount according to the authenticated payment rule.

In another embodiment, the first transaction device acts as a payment receipt device. The current power state is one of a power-on with power available sate, a power-off with power available sate and a power-off without power available state, and a transaction rule corresponding to the current power state comprises whether to enable a payment receipt function, and a payment receipt rule in the case of enabled payment receipt function.

The digital currency card application apparatus 500 may establish a near field communication connection with the second transaction device by means of the first transaction device, and receive a transaction request sent by the second transaction device.

The first transaction device and/or the second transaction device are/is a mobile intelligent device, and the form of the mobile intelligent device is one of a mobile phone, a watch, a bracelet, a card and a POS machine.

Fig. 6 is a structural block diagram of acquiring a power state by a digital currency card application apparatus according to an embodiment of the present disclosure. As shown in Fig. 6, for example, the payment device or the receipt device is a mobile intelligent terminal, the mobile intelligent terminal is provided with a secure element (SE), a digital currency card application apparatus runs in the secure element, and the digital currency card application apparatus calls a chip operating system (COS) interface of the secure element, so that the COS of the secure element acquires the current power state of the mobile intelligent terminal by means of a software/hardware power state acquisition interface reserved by the mobile intelligent terminal system.

On the basis of the acquired power state, the digital currency card application apparatus may perform the payment or receipt operations of digital currency. For example, a digital currency function has been activated in a digital currency card application apparatus operated in the secure element (SE) of the mobile intelligent terminal; after receiving a receipt or payment request sent by the counterpart party of the transaction, the digital currency card application apparatus verifies the certificate of the counterpart user; the digital currency card application apparatus operated in the secure element (SE) of the mobile intelligent terminal acquires the power state of the mobile intelligent terminal by means of a COS interface of the secure element (SE), i.e., the SE can acquire the power state by means of a software/hardware power state acquisition interface reserved by the mobile intelligent terminal system for the SE; the digital currency card application apparatus determines an acquired power state value; the power state value may comprise one of a power-on with power available sate, a power-off with power available sate and a power-off without power available state; and the digital currency card application apparatus performs the payment operation or the receipt operation of digital currency according to the digital currency payment or receipt rule, set by a user, in a power-on with power available sate, a power-off with power available sate or a power-off without power available state.

Fig. 7 is a diagram showing the main structure of a digital currency transaction system according to an embodiment of the present disclosure. As shown in Fig. 7, the digital currency transaction system 700 of one embodiment of the present disclosure mainly comprises: a digital currency card application apparatus 701, and further comprises a secure element 702 provided with a chip operating system interface. The digital currency card application apparatus 701 and the secure element 702 are located in a first transaction device.

The digital currency card application apparatus 701 runs in the secure element, and the function of the digital currency card application apparatus 701 is the same as that of the digital currency card application apparatus 500. For details, reference may be made to the description of the foregoing embodiments.

The secure element 702 is configured to acquire, according to a calling request of the digital currency card application apparatus 701 for the chip operating system interface, a current power state of the first transaction device from a software/hardware power state acquisition interface reserved by the first transaction device, and to return the current power state to the digital currency card application apparatus 701.

The first transaction device serves as a payment device or a payment receipt device, and when the first transaction device serves as a payment device, the digital currency transaction system 700 may also be referred to as a digital currency payment system. When the first transaction device is acting as a receipt device, the digital currency transaction system 700 may also be referred to as a digital currency receipt system.

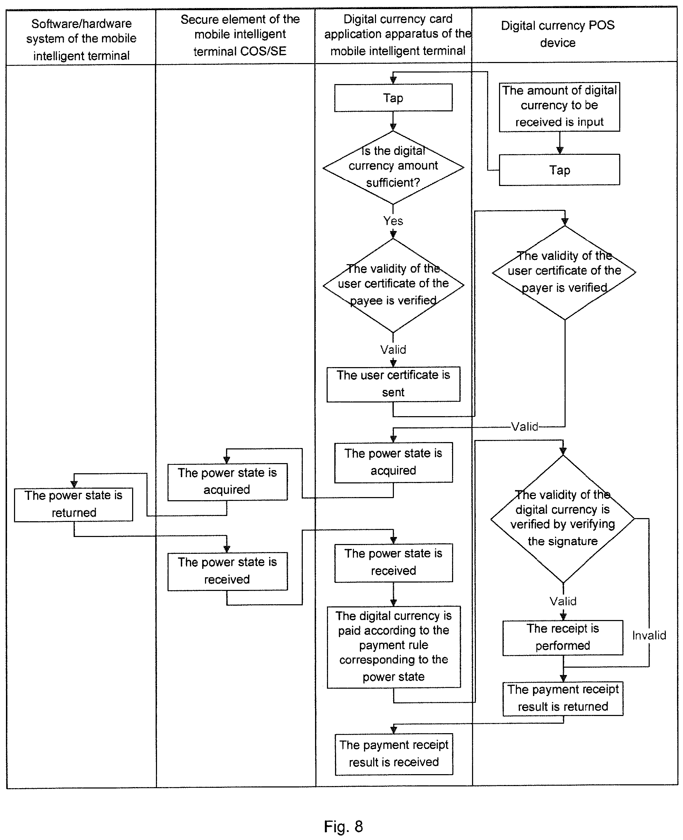

Fig. 8 is a schematic diagram of a digital currency payment framework according to an embodiment of the present disclosure.

As shown in Fig. 8, the digital currency payment framework of one embodiment of the present disclosure relates to a software/hardware system of the mobile intelligent terminal, a secure element (SE) of the mobile intelligent terminal, a digital currency card application apparatus running on the secure element of the mobile intelligent terminal, and a digital currency POS device, wherein the payment device is the mobile intelligent terminal, and the payment receipt device is the digital currency POS device. The interaction between the software/hardware system of the mobile intelligent terminal, the SE of the mobile intelligent terminal, the digital currency card application apparatus running on the secure element of the mobile intelligent terminal, and the digital currency POS device is as shown in Fig. 8.

The amount of digital currency to be received is entered in the receipt side of the digital currency POS device.

The mobile intelligent terminal "taps" the digital currency POS device to prepare for payment.

The payee and the payer verify the validity of the user certificate of each other; if the verification is passed, the next step is continued; if the verification fails, it indicates that the user identity is counterfeit, and the transaction ends; before verification of the user certificate, digital currency card application apparatus of the mobile intelligent terminal may also firstly determine whether the digital currency is sufficient, i.e. determining whether the amount of the digital currency is greater than or equal to the amount of the digital currency to be paid, if not, the transaction ends, and if so, the step of verifying the user certificate is executed. When verifying a user certificate, the digital currency card application apparatus of the mobile intelligent terminal may first verify the validity of a payee's user certificate sent by the digital currency POS device, and if it is valid, the user certificate (the payer user's certificate) of the mobile intelligent terminal is sent to the digital currency POS device to be verified by the digital currency POS device.

After the verification of the validity of the user certificate is passed, the digital currency card application apparatus running on the secure element (SE) of the mobile intelligent terminal calls a COS interface of the secure element, wherein the COS interface is a chip operating system interface of the secure element.

The COS of the secure element acquires a power state value from a soft/hardware system of the mobile intelligent terminal, and returns the acquired power state to the digital currency card application apparatus of the SE.

The digital currency card application apparatus of the SE performs digital currency payment according to a payment rule corresponding to the power state. The payment rules, for example, include the password-free or the authentication, the total amount, the single payment amount, and the payment number of password-free payments, etc.

The payee's digital currency POS device verifies a received signature of the digital currency by using a root certificate, and verifies the authenticity of the digital currency, and if the verification is passed, then receipt is executed; the root certificate may be generated and provided by a digital currency issuer, and if the validity verification of the digital currency is passed, the receipt is performed, otherwise, the receipt is not performed.

The digital currency POS device returns a receipt result to the digital currency card application apparatus run in the SE of the mobile intelligent terminal of the payer. The receipt result includes information such as the amount of the receipt which is received successfully, or the prompt information such as a receipt failure.

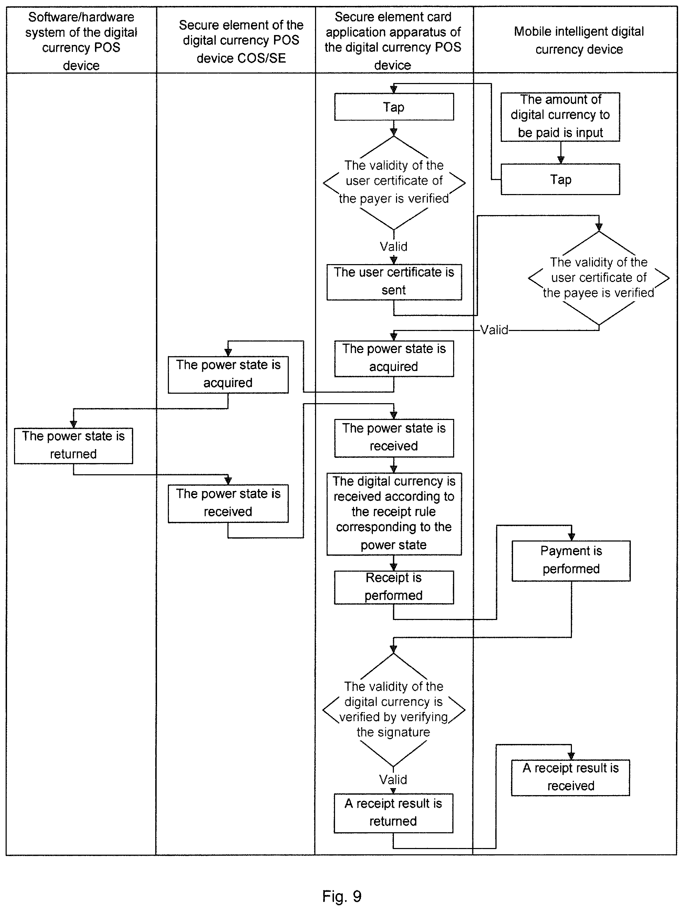

Fig. 9 is a schematic diagram of a digital currency receipt framework according to an embodiment of the present disclosure.

As shown in Fig. 9, the digital currency receipt framework of one embodiment of the present disclosure relates to a software/hardware system of a digital currency POS device, a secure element (SE) of the digital currency POS device, a digital currency card application apparatus (i.e. the secure element card application of the digital currency POS device) running on the secure element of the digital currency POS device, and a mobile intelligent digital currency device, wherein the payment device is the mobile intelligent digital currency device, the receipt device is a digital currency POS device, and the mobile intelligent digital currency device may be one of a smart phone, a smart watch, a smart bracelet and an IC card.

The interaction between the software/hardware system of the digital currency POS device, the SE of the digital currency POS device, the digital currency card application apparatus running on the secure element of the digital currency POS device, and the mobile intelligent terminal digital currency device is as shown in Fig. 9.

The amount of the digital currency to be paid is input to the mobile intelligent digital currency device.

The mobile intelligent digital currency device "taps" the digital currency POS device to prepare for payment.

The payee and the payer verify the validity of the user certificate of each other; if the verification is passed, the next step is continued; if the verification fails, it indicates that the user identity is counterfeit, and the transaction ends; the verification of the user certificate has been introduced above, and will not be repeated here.

The digital currency card application apparatus running on a secure element (SE) card of the digital currency POS device calls a COS interface of the secure element.

The COS of the secure element of the digital currency POS device acquires a power state value from the software/hardware system of the digital currency POS device, and returns the power state value to the digital currency card application apparatus of the Secure Element (SE) of the digital currency POS device.

The digital currency card application apparatus of the SE receives the digital currency according to a power state and a receipt rule. The receipt rule includes, for example, the total amount, the single receipt amount, and the receipt number of the receipts, etc.

The payee's digital currency POS device verifies a received signature of the digital currency by using a root certificate, and verifies the authenticity of the digital currency, and if the verification is passed, then receipt is executed; otherwise, the receipt operation is not executed.

The digital currency POS device returns the receipt result to the mobile intelligent digital currency device of the payer.

It should be noted that, the receipt device in the embodiment of the present disclosure is not limited to a digital currency intelligent POS machine, and may also be any one of digital currency mobile intelligent devices such as a smart phone, a smart watch, a smart bracelet, and an IC card. The digital currency intelligent POS machine in the foregoing embodiment may be replaced with any one of the digital currency mobile intelligent devices listed above.

In the embodiments of the present disclosure, the digital currency card application apparatus of the SE acquires a power state by means of a COS interface of the SE, the SE specifically acquires a power state by means of a soft/hardware system of the mobile intelligent terminal. After the digital currency card application apparatus running on the SE of the mobile intelligent device acquires the power state of the mobile intelligent device, digital currency payment is performed according to a payment rule corresponding to the power state, wherein the payment rule comprises: the password-free or the authentication, the total amount, the single payment amount, and the payment number of password-free payments, etc. For example, after acquiring the power state of the mobile intelligent device, the digital currency card application apparatus running on the SE of the mobile intelligent device receives the digital currency according to a receipt rule corresponding to the power state, wherein the receipt rule comprises: the total amount, the single receipt amount, and the receipt number of the receipts, etc. In a digital currency system, when the mobile intelligent device, such as a smart phone, a smart watch, a smart bracelet and an IC card, is power off, the digital currency may be stored by means of the SE, and the payment operation and the receipt operations of the digital currency in scenarios of power-on with power available, power-off with power available, and power-off without power available of the mobile intelligent device are realized.

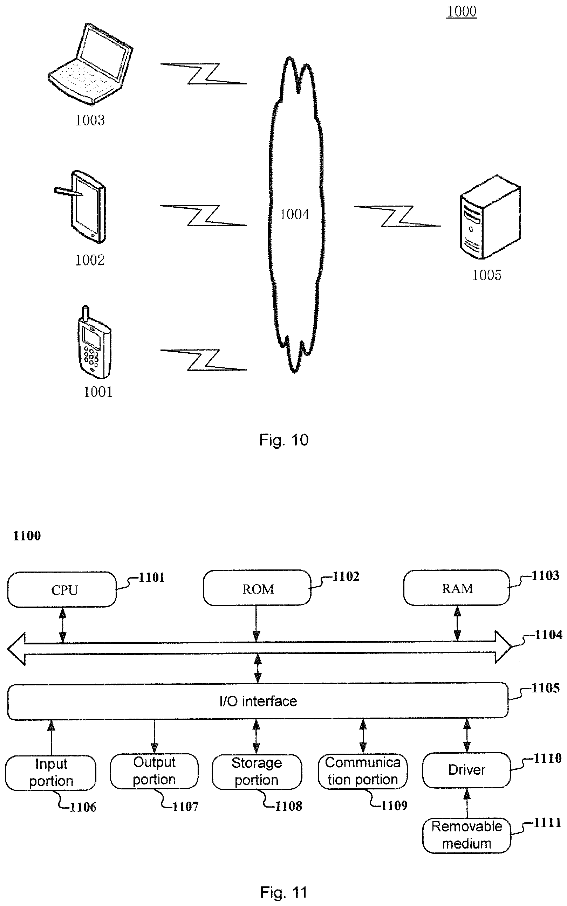

Fig. 10 shows an exemplary system architecture 1000 of a digital currency transaction method or a digital currency card application apparatus to which an embodiment of the present disclosure may be applied.

As shown in Fig. 10, the system architecture 1000 may comprise terminal devices 1001, 1002, 1003, a network 1004, and a server 1005. The network 1004 is a medium that may be used to provide communication links between the terminal devices 1001, 1002, 1003 and the server 1005. The network 1004 may comprise a variety of connection types, such as a wire, a wireless communication link or a fiber optic cable.

A user may use the terminal devices 1001, 1002, 1003 to interact with the server 1005 over the network 1004, to receive or send messages, etc. Various communication client applications, such as shopping applications, webpage browser applications, search applications, instant messaging tools, mailbox clients, and social platform software (only examples), may be installed on the terminal devices 1001, 1002 and 1003.

The terminal devices 1001, 1002, and 1003 may be various electronic devices that have a display screen and support webpage browsing, including but not limited to a smart phone, a tablet computer, a laptop portable computer, a desktop computer, etc.

The server 1005 may be a server providing various services, for example, a backend management server providing support for shopping websites browsed by users by using the terminal devices 1001, 1002 and 1003 (for example only). The backend management server may perform processing such as analysis on the received data such as a product information query request, and feed back a processing result (such as target push information and product information, for example only) to the terminal device.

It should be noted that, the digital currency transaction method provided in the embodiment of the present disclosure is generally executed by the terminal devices 1001, 1002 and 1003, and correspondingly, the digital currency card application apparatus is generally provided in the terminal devices 1001, 1002 and 1003.

It should be understood that the numbers of the terminal devices, networks, and servers in Fig. 10 are only illustrative. The numbers of the terminal devices, networks, and servers can be configured according to actual requirements.

Refer now to Fig. 11 which shows a block diagram of a computer system 1100 for implementing a terminal device of an embodiment of the present disclosure. The terminal device illustrated in Fig. 11 is merely an example, and is not intended to limit functions and scope of application of the embodiments of the present disclosure.

As shown in Fig. 11, the computer system 1100 comprises a Central Processing Unit (CPU) 1101 that can perform various suitable actions and processes in accordance with a program stored in a Read Only Memory (ROM) 1102 or a program loaded from a storage portion 1108 into a Random Access Memory (RAM) 1103. In the RAM 1103, various programs and data necessary for the operation of the system 1100 are also stored. The CPU 1101, the ROM 1102 and the RAM 1103 are connected to one another by means of a bus 1104. An Input/Output (I/O) interface 1105 is also connected to the bus 1104.

The following components are connected to the I/O interface 1105: an input portion 1106 including a keyboard, mouse, etc.; an output portion 1107 including, for example, a cathode ray tube (CRT), a liquid crystal display (LCD) and a speaker; a storage portion 1108 including a hard disk etc.; and a communication portion 1109 including a network interface card such as an LAN card and a modem. The communication portion 1109 performs communication processing by means of a network such as the Internet. A driver 1110 is also connected to an I/O interface 1105 as needed. A removable medium 1111 such as a magnetic disk, an optical disk, a magneto-optical disk and a semiconductor memory is installed on the driver 1110 as required, so that a computer program read therefrom is installed into the storage portion 1108 as required.

In particular, according to the embodiments disclosed in the present disclosure, the processes described above with reference to the flowcharts can be implemented as computer software programs. For example, the embodiments disclosed in the present disclosure include a computer program product comprising a computer program carried on a computer readable medium. The computer program comprises a program code for executing the method as shown in the flowchart. In such embodiments, the computer program may be downloaded and installed from the network by means of a communication portion 1109, and/or installed from a removable medium 1111. When the computer program is executed by the central processing unit (CPU) 1101, the described functions defined in the system of the present disclosure are executed.

It should be noted that the computer readable medium in the present disclosure may be a computer readable signal medium or a computer readable storage medium, or any combination thereof. The readable storage medium can be, for example, but is not limited to, an electronic, magnetic, optical, electromagnetic, infrared, or semiconductor system, apparatus, or device, or any combination thereof. More specific examples of the computer readable storage medium may include, but are not limited to, electrical connections with one or more wires, a portable computer disk, a hard disk, a random access memory (RAM), a read-only memory (ROM), an erasable Programmable read-only memory (EPROM or flash memory), an optical fiber, a portable compact disk read-only memory (CD-ROM), an optical storage device, a magnetic storage device, or any suitable combination of the above. In the present disclosure, the computer readable storage medium may be any tangible medium that can contain or store programs for use by or in combination with an instruction execution system, apparatus, or device. In the present disclosure, the computer-readable signal medium can include a data signal in baseband or propagated as part of a carrier wave, which carries readable program codes. Such a propagated data signal can take many forms, including but not limited to electromagnetic signals, optical signals, or any suitable combination of the above. The readable signal medium can also be any readable medium other than a readable storage medium, and the readable medium can send, propagate, or transmit a program for use by or in combination with an instruction execution system, apparatus, or device. The program codes contained on the readable medium can be transmitted through any appropriate medium, including but not limited to wireless, wired, optical fiber cable, RF, etc., or any suitable combination of the above.

The flowcharts and block diagrams in the drawings show possible architectures, functions, and operations of the system, method, and computer program product according to the embodiments of the present disclosure. In this regard, each block in the flowcharts or block diagrams may represent a module, a program segment, or part of codes containing one or more executable instructions for implementing specified logical functions. It is also to be noted that in some alternative implementations, the functions marked in the blocks may occur in an order different from those marked in the drawings. For example, two successive blocks may, in fact, be executed basically in parallel or in a reverse order, which depends on the functions involved. It is also to be noted that each block in the block diagrams and/or flowcharts and a combination of blocks in the block diagrams and/or flowcharts may be implemented by a special-purpose hardware-based system executing a specified function or operation or may be implemented by a combination of special-purpose hardware and computer instructions.

The modules involved in the embodiments of the present disclosure may be implemented by software or hardware. The described modules may also be arranged in a processor, and for example, may be described as: a processor comprising a request receiving module, a power state acquiring module, and a transaction module. The names of these modules are not intended to limit the module itself in a certain circumstance, for example, the request receiving module may also be described as "a module configured to receive a transaction request sent by the second transaction device".

As another aspect, the present disclosure also provides a computer readable medium. The computer readable medium may be included in the device described in the above embodiments, or a stand-alone computer readable medium not assembled into the device. The computer readable medium bears one or more programs. When the one or more programs are executed by a device, the device is enabled to execute: acquiring, by a digital currency card application apparatus of a first transaction device, a current power state of the first transaction device after receiving a transaction request sent by a second transaction device; and performing, by the digital currency card application apparatus, a digital currency transaction with the second transaction device according to a transaction rule corresponding to the current power state.

According to the technical solution of the embodiments of the present disclosure, a digital currency card application apparatus of a first transaction device acquires a current power state of the first transaction device after receiving a transaction request sent by a second transaction device; and performs digital currency transaction with the second transaction device according to a transaction rule corresponding to the current power state of the first transaction device. The power state of a mobile intelligent terminal can be acquired, and the payment operation and the receipt operation of the digital currency in scenarios of power-on with power available, power-off with power available, and power-off without power available can be realized on the basis of the power state of the mobile intelligent device.

The specific embodiments do not limit the scope of protection of the present disclosure. It will be apparent to a person skilled in the art that various modifications, combinations, sub-combinations, and replacements can be made according to design requirements and other factors. Any modifications, equivalent replacements, improvements, etc. made within the spirit and principle of the present disclosure shall all fall within the scope of protection of the present disclosure.

### Industrial Applicability

The solutions provided in the embodiments of the present disclosure may be applied to the technical field of computers. In the embodiments of the present disclosure, after the digital currency card application apparatus of the first transaction device receives the transaction request sent by the second transaction device, the purpose of performing digital currency transaction with the second transaction device according to a transaction rule corresponding to the current power state of the first transaction device is achieved by acquiring the current power state of the first transaction device, thereby achieving the technical effects of realizing transaction operations of the payment and the receipt on the digital currency in scenarios of power-on with power available, power-off with power available, and power-off without power available on the basis of the power state of the mobile intelligent device.

## Claims

1. A digital currency transaction method, comprising:
acquiring, by a digital currency card application apparatus of a first transaction device, a current power state of the first transaction device after receiving a transaction request sent by a second transaction device; and
performing, by the digital currency card application apparatus, a digital currency transaction with the second transaction device according to a transaction rule corresponding to the current power state.

2. The method as claimed in claim 1, wherein the acquiring, by a digital currency card application apparatus of a first transaction device, a current power state of the first transaction device after receiving a transaction request sent by the second transaction device, comprises:
performing, by the digital currency card application apparatus, certificate verification with the second transaction device after receiving the transaction request sent by the second transaction device, wherein the certificate verification is configured to verify the validity of the user certificates of both the first transaction device and the second transaction device;
acquiring, by the digital currency card application apparatus, the current power state of the first transaction device after determining that the certificate verification has passed.

3. The method as claimed in claim 1, wherein the digital currency card application apparatus runs in a secure element of the first transaction device;
the acquiring a current power state of the first transaction device comprises:
calling, by the digital currency card application apparatus, a chip operating system interface of the secure element, and thereby the secure element acquiring the current power state from a software/hardware power state acquisition interface reserved by the first transaction device.

4. The method as claimed in claim 1, further comprising:
pre-storing, by the digital currency card application apparatus, transaction rules written by a digital currency backend system and corresponding to various power states, wherein the transaction rules corresponding to various power states are set by a digital currency application program and sent to the digital currency backend system, or are created by the digital currency backend system when issuing by the digital currency card application apparatus.

5. The method as claimed in claim 1 or 4, wherein the first transaction device serves as a payment device;
when the current power state is a power-on with power available state, the transaction rule corresponding to the current power state comprises whether to enable a payment function, and a password-free payment rule and/or authenticated payment rule in a case of enabled payment function; and
when the current power state is a power-off with power available sate or a power-off without power available state, the transaction rule corresponding to the current power state comprises whether to enable a payment function, and a password-free payment rule in a case of enabled payment function.

6. The method as claimed in claim 5, wherein the performing, by the digital currency card application apparatus, a digital currency transaction with the second transaction device according to a transaction rule corresponding to the current power state comprising:
determining, by the digital currency card application apparatus, according to the transaction rule, that the payment function is enabled and the password-free payment rule has been set, wherein the password-free payment rule comprises a password-free payment amount;
performing, by the digital currency card application apparatus, a password-free payment on a digital currency of a payment amount when the payment amount in the transaction request is less than or equal to the password-free payment amount;
when a payment amount in the transaction request is greater than the password-free payment amount, determining, by the digital currency card application apparatus, that the current power state is the power-on with power available state and the authenticated payment rule has been set, and performing authenticated payment on a digital currency of the payment amount according to the authenticated payment rule.

7. The method as claimed in claim 1 or 4, wherein the first transaction device serves as a payment receipt device, the current power state is one of a power-on with power available sate, a power-off with power available sate and a power-off without power available state, and the transaction rule corresponding to the current power state comprises whether to enable a payment receipt function, and a payment receipt rule in a case of enabled payment receipt function.

8. The method as claimed in claim 1, further comprising:
establishing, by the digital currency card application apparatus, a near field communication connection with the second transaction device by means of the first transaction device, and receiving a transaction request sent by the second transaction device.

9. The method as claimed in claim 1, wherein the first transaction device and/or the second transaction device are/is a mobile intelligent device, and a form of the mobile intelligent device is one of a mobile phone, a watch, a bracelet, a card and a POS machine.

10. A digital currency card application apparatus, located in a first transaction device, comprising:
a request receiving module, configured to receive a transaction request sent by a second transaction device;
a power state acquiring module, configured to acquire a current power state of the first transaction device;
a transaction module, configured to perform a digital currency transaction with the second transaction device according to a transaction rule corresponding to the current power state.

11. A digital currency transaction system, comprising the digital currency card application apparatus as claimed in claim 10, and further comprising a secure element provided with a chip operating system interface, wherein the digital currency card application apparatus runs in the secure element, and the digital currency card application apparatus and the secure element are located in a first transaction device; and
the secure element is configured to acquire, according to a calling request of the digital currency card application apparatus for the chip operating system interface, a current power state of the first transaction device from a software/hardware power state acquisition interface reserved by the first transaction device, and return the current power state to the digital currency card application apparatus.

12. An electronic device, comprising:
one or more processors; and
a memory arranged to store one or more programs,
when the one or more programs are executed by the one or more processors, the one or more processors implementing the method as claimed in any one of claims 1 to 9.

13. A computer readable medium, on which a computer program is stored, wherein when the computer program is executed by a processor, the method as claimed in any one of claims 1 to 9 is implemented.
